# EUROPÄISCHE PATENTSCHRIFT

(11) **EP 1 167 710 B1**
(45) Veröffentlichungstag und Bekanntmachung des Hinweises auf die Patenterteilung: **06.04.2005**
(21) Anmeldenummer: 01250242.3
(22) Anmeldetag: 27.06.2001
(51) Int. Cl.: F01N 3/08, F01N 3/20, F02D 41/02, B01D 53/94

(54) **Verfahren und Vorrichtung zur Erhöhung einer Katalysatortemperatur**
Method and apparatus to increase the temperature of a catalyst
Procédé et dispositif pour augmenter la température d'un catalyseur

(30) Priorität: 01.07.2000 DE 10032085; 30.05.2001 DE 10127555
(43) Veröffentlichungstag der Anmeldung: 02.01.2002
(73) Patentinhaber: Volkswagen Aktiengesellschaft, 38436 Wolfsburg (DE)
(72) Erfinder: Pott, Ekkehard, Dr., 38518 Gifhorn (DE); Zillmer, Michael, Dr., 38173 Sickte (DE)
(74) Vertreter: Schneider, Henry, Dipl.-Ing.

(56) Entgegenhaltungen:
- EP-A- 0 972 927
- EP-A- 0 987 408
- EP-A- 1 179 124
- WO-A-00/23702
- WO-A-98/27322

## Beschreibung

Die Erfindung betrifft ein Verfahren sowie eine Vorrichtung zur Erhöhung einer Katalysatortemperatur eines in einer Abgasanlage einer Verbrennungskraftmaschine angeordneten Katalysators mit den Merkmalen der Oberbegriffe der unabhängigen Ansprüche 1 und 15.

Um eine Abgasnachbehandlung von Abgasen aus Verbrennungskraftmaschinen vorzunehmen, ist es bekannt, Katalysatoren oder Katalysatorsysteme aus verschiedenartigen Katalysatortypen in Abgasanlagen der Verbrennungskraftmaschinen anzuordnen. Die Katalysatoren konvertieren bestimmte im Abgas enthaltene Schadstoffe zu unbedenklichen oder weniger umweltrelevanten Produkten. Daneben sind auch Speicherkatalysatoren, beispielsweise NOₓ-Speicherkatalysatoren, bekannt, die in normalen Betriebsphasen bestimmte Abgaskomponenten einlagern und diese in so genannten Regenerationsphasen wieder freisetzen und konvertieren.

Es treten verschiedene Situationen auf, in denen eine Anhebung einer Katalysatortemperatur erforderlich sein kann. Dies ist beispielsweise in Startphasen von Verbrennungskraftmaschinen der Fall, bei denen die Katalysatortemperatur noch unterhalb einer Mindesttemperatur liegt, die für eine ausreichende Konvertierungsrate des Katalysators notwendig ist. Auch, um eine Regeneration eines Speicherkatalysators durchzuführen, ist für die Desorption der eingespeicherten Komponente eine Mindesttemperatur am Katalysator erforderlich, die häufig von bestimmten Motortypen oder in lastschwachen Betriebssituationen nicht ohne weiteres erreicht wird. Die größte Bedeutung hat die Katalysatorheizung jedoch im Zusammenhang mit so genannten Entschwefelungen von NOₓ-Speicherkatalysatoren, durch welche der Speicherkatalysator von unerwünscht eingelagertem Schwefel befreit werden soll. Für die Desorption des in Form von Sulfat eingelagerten Schwefels bedarf es nämlich einer Mindest-Entschwefelungstemperatur, die katalysatorabhängig bei zirka 600 °C liegt und damit sehr hoch ist. Ohne aktive Heizmaßnahmen wird diese nur in Ausnahmefällen erreicht.

Um die Katalysatortemperatur anzuheben, werden üblicherweise motorische Maßnahmen ergriffen, mit denen ein Energieeintrag in die Abgasanlage beziehungsweise in den Katalysator erhöht wird. Geeignete motorische Maßnahmen sind beispielsweise Spätzündung oder eine Erhöhung eines Kraftstoffanteiles in einem in die Verbrennungskraftmaschine einzuspeisenden Luft-Kraftstoff-Gemisch. Auch nichtmotorische Maßnahmen zur direkten Abgas- oder Katalysatorbeheizung sind bekannt. Der Energieeintrag wird dabei derart bemessen, dass vorgebbare Maximalwerte für die Katalysatortemperatur nicht überschritten werden. Im Falle von Entschwefelungen von NOₓ-Speicherkatalysatoren orientieren sich diese Maximalwerte an Temperaturschwellen, bei deren Überschreitung mit einer thermischen, üblicherweise irreversiblen Schädigung des Katalysators gerechnet werden muss. Ist dem Speicherkatalysator ein weiterer Katalysator vorgeschaltet, insbesondere ein motornah angeordneter Vorkatalysator, ist die Höhe des Energieeintrages in der Regel durch dessen Temperaturbeständigkeit limitiert. Dabei wird, um das Risiko der Katalysatorschädigung gering zu halten, ein vergleichsweise großer Sicherheitsabstand zwischen dem vorgegebenen Maximalwert und der kritischen Katalysatortemperatur eingehalten. Die vergleichsweise niedrig angesetzte Maximaltemperatur führt jedoch zu einem langen Aufheizvorgang und somit zu einem hohen Mehrverbrauch. Ferner wird trotz Einhaltung der genannten Temperaturgrenzen bei jeder thermischen Belastung eine gewisse thermische Schädigung (Alterung) des Katalysators beobachtet.

WO-A-98 27322 beschreibt ein Verfahren zur Erhöhung einer Katalysatortemperatur eines NOₓ-Speichers, wobei die Verbrennungskraftmaschine mit einem unterstöchiometrischen (fetten) Luft-Kraftstoff-Gemisch mit einem konstanten Lambdawert von 0,8 betrieben wird, das heißt durch eine motorische Maßnahme der Energieeintrag in die Abgasanlage erhöht wird. Die Erhöhung des Energieeintrags in die Abgasanlage erfolgt in einer einzigen Stufe.

Aus EP-A-0 987 408 ist ein Verfahren zur Entschwefelung von zwei hintereinander geschalteten NOx-Speicherkatalysatoren bekannt, die unabhängig voneinander mit Sekundärluft beaufschlagbar sind. Die Entschwefelung der beiden NOₓ-Speicherkatalysatoren wird alternierend durchgeführt, wobei die Sekundärluftzuführung so gesteuert wird, dass der jeweils zu entschwefelnde Katalysator mit einem unterstöchiometrischen Abgas beaufschlagt wird. Somit wird jeder der Katalysatoren während de Entschwefelung und während der vorgeschalteten Heizphase mit einem konstanten Energieeintrag beaufschlagt.

EP-A-0 972 927 beschreibt ein Verfahren zur NOₓ-Regeneration eines Speicherkatalysators, der im Normalbetrieb alternierend mit einem mageren und einem stöchiometrischen Abgas beaufschlagt wird. Zur Durchführung der NOx-Regeneration wird das zeitliche Verhältnis der Magerphasen zu den Fettphasen verringert, das heißt die unterstöchiometrischen Anteile erhöht, wobei die Katalysatortemperatur in Folge der exothermen Katalysatorreaktionen ansteigt. Damit wird eine im zeitlichen Mittel eingetragene Energiemenge erhöht. Während der Aufheizphase ist der Energieeintrag konstant.

EP-A-1 179 124 beschreibt ein Verfahren zur Aufheizung eines NOₓ-Speicherkatalysators, wobei zunächst eine erste Heizmaßnahme durchgeführt wird und - wenn diese die erforderliche Entschwefelungstemperatur des Katalysators nicht herbeiführt - eine weitere Heizmaßnahme erfolgt. Führt auch diese nicht zum Erfolg, wird eine weitere Heizmaßnahme eingeleitet und so weiter. Konkrete Angaben zur Bemessung der Höhe der einzelnen Energieeinträge sind nicht offenbart.

Der Erfindung liegt die Aufgabe zugrunde, ein Verfahren zur Erhöhung einer Katalysatortemperatur bereitzustellen, welches kurze Heizzeiten und möglichst geringe thermische Belastungen des Katalysators ermöglicht. Es soll ferner eine Vorrichtung zur Durchführung des Verfahrens bereitgestellt werden.

Diese Aufgabe wird durch ein Verfahren sowie eine Vorrichtung mit den Merkmalen der unabhängigen Ansprüchen 1 und 15 gelöst. Es ist vorgesehen, dass durch mindestens eine motorische und/oder nichtmotorische Maßnahme ein Energieeintrag in die Abgasanlage gegenüber einem betriebspunktbedingten Energieeintrag erhöht wird und die Erhöhung des Energieeintrages in die Abgasanlage in mindestens zwei aufeinander folgenden Stufen mit unterschiedlichen Energieintensitäten durchgeführt wird. Erfindungsgemäß wird ein erster Energieeintrag einer ersten Stufe derart bemessen, dass eine mit dem ersten Energieeintrag maximal erreichbare Katalysatortemperatur des zu beheizenden Katalysators im Wesentlichen einer angestrebten Mindesttemperatur entspricht oder geringfügig größer als diese ist. In einer nachfolgenden Stufe wird der Energieeintrag erhöht. Mit anderen Worten wird eine zum Zweck der Katalysatorheizung zusätzlich in die Abgasanlage eingetragene Energiemenge pro Zeiteinheit stufenweise variiert. Dabei wird im Rahmen der vorliegenden Beschreibung unter dem Begriff Energieeintrag die Summe aus einer thermischen Energie des Abgases verstanden, also die direkt aus der Verbrennung resultierende Abgastemperatur, sowie einer chemisch, hauptsächlich in Form unverbrannter Kohlenwasserstoffe HC, gebundenen Energie, die bei einer Nachverbrennung, beispielsweise an einem Vorkatalysator, als Wärmeenergie freigesetzt wird. Ist eine nichtmotorische Maßnahme vorgesehen, etwa eine elektrische Widerstandsheizung, so trägt auch diese zum Energieeintrag bei. Die stufenweise Erhöhung des Energieeintrages mit der angegebenen Bemessung der ersten Stufe ermöglicht ein schnelleres Erreichen einer angestrebten Mindesttemperatur des Katalysators gegenüber herkömmlichen einstufigen Aufheizverfahren. Darüber hinaus wird das Risiko eines betriebspunktabhängigen Übersteuerns einer vorgebbaren Maximaltemperatur des zu beheizenden Katalysators oder eines diesem vorgeschalteten Katalysators vermindert. Ferner wird die einmal erreichte Mindesttemperatur auch bei betriebsbedingten Temperaturschwankungen mit einer höheren Wahrscheinlichkeit eingehalten, so dass das erfindungsgemäße Verfahren auch eine höhere Prozesssicherheit aufweist. Dies erlaubt die Beschränkung des Heizvorgangs insgesamt auf eine vergleichsweise kurze Dauer. Dadurch kann nicht nur ein für die Aufheizung aufzuwendender Kraftstoff-Mehrverbrauch reduziert werden, sondern auch die thermische Belastung des Katalysators.

Es ist besonders bevorzugt vorgesehen, dass eine durch die Erhöhung des Energieeintrages zusätzlich in die Abgasanlage eingebrachte Energiemenge in Abhängigkeit von einem betriebspunktbedingten Energieeintrag und/oder einer aktuellen Katalysatortemperatur bemessen wird. Liegt beispielsweise aufgrund einer aktuellen Hochlastsituation der Verbrennungskraftmaschine ohnehin ein verhältnismäßig hoher Energieeintrag vor, so kann die zusätzlich eingetragene Energiemenge relativ gering bemessen werden.

Nach einer bevorzugten Ausbildung des Verfahrens erfolgt die Anhebung des Energieeintrages ausgehend von einem zunächst relativ geringen zusätzlichen Energieeintrag in genau zwei Stufen.

Erfindungsgemäß wird der Energieeintrag während einer ersten Stufe derart bemessen, dass eine mit dem ersten Energieeintrag maximal erreichbare Temperatur des zu heizenden Katalysators ungefähr der angestrebten Mindesttemperatur entspricht oder geringfügig größer als diese ist. Dabei ist gemäß einer bevorzugten Ausgestaltung der Erfindung femer vorgesehen, dass eine zweite Stufe beginnt, ehe die maximal in der vorausgegangenen Stufe erreichbare Katalysatortemperatur erreicht ist. Ein Energieeintrag einer letzten Stufe schließlich sollte derart bemessen sein, dass eine mit dem Energieeintrag maximal erzielbare Temperatur des zu beheizenden Katalysators und/oder eines diesem vorgeschalteten Katalysators eine vorgebbare Maximaltemperatur nicht überschreitet.

Es ist weiterhin bevorzugt vorgesehen, dass auf eine folgende Stufe der Erhöhung des Energieeintrages verzichtet wird, wenn in der vorausgegangenen Stufe die angestrebte Mindesttemperatur am zu beheizenden Katalysator bereits erreicht wurde. Ob dies der Fall ist, hängt im Wesentlichen von der aktuellen Betriebssituation des Fahrzeuges ab.

Obwohl das Verfahren in allen Situationen, in denen eine Katalysatortemperatur angehoben werden soll, anwendbar ist, kommt es besonders vorteilhaft im Zusammenhang mit Entschwefelungen von NOₓ-Speicherkatalysatoren zum Tragen. In diesem Fall entspricht die angestrebte Mindesttemperatur einer Mindest-Entschwefelungstemperatur von NOₓ-Speicherkatalysatoren. Diese liegt üblicherweise bei etwa 600 °C. Im Zusammenhang mit der Entschwefelung von NOₓ-Speicherkatalysatoren wird ebenfalls eine zweistufige Erhöhung des Energieeintrages bevorzugt, wobei eine Dauer der ersten Stufe 100 bis 800 s, insbesondere 400 bis 600 s, beträgt und ihr Energieeintrag einer Katalysatortemperatur eines dem NOₓ-Speicherkatalysator vorgeschalteten Vorkatalysators von 800 bis 1100 °C, insbesondere 900 bis 1030 °C, entspricht. Eine Dauer der zweiten Stufe beträgt vorteilhafterweise 100 bis 800 s, insbesondere 400 bis 600 s, während ihr Energieeintrag einer Vorkatalysatortemperatur von 900 bis 1150 °C, insbesondere von 960 bis 1090 °C, entspricht. Die Zeiträume der beiden Stufen müssen nicht notwendigerweise gleich gewählt werden.

Die erfindungsgemäße Vorrichtung sieht Mittel vor, mit welchen die Erhöhung des Energieeintrages in den Katalysator mit unterschiedlichen Intensitäten ausführbar ist. Die Mittel umfassen vorzugsweise eine Steuereinheit, in welcher eine Prozedur zur Steuerung der Verfahrensschritte zur Durchführung der Erhöhung der Katalysatortemperatur in digitaler Form hinterlegt ist. Die Steuereinheit kann auch besonders vorteilhaft in ein Motorsteuergerät integriert sein.

Weitere vorteilhafte Ausgestaltungen sind Gegenstand der übrigen Unteransprüche.

Die Erfindung wird nachfolgend in Ausführungsbeispielen anhand der zugehörigen Zeichnungen näher erläutert. Es zeigen:
- Figur 1: schematisch einen Aufbau einer Abgasanlage einer Verbrennungskraftmaschine mit einem NOₓ-Speicherkatalysator und
- Figur 2: einen zeitlichen Verlauf eines Energieeintrages in eine Abgasanlage sowie den Verlauf einer Temperatur eines in dieser angeordneten Katalysators.

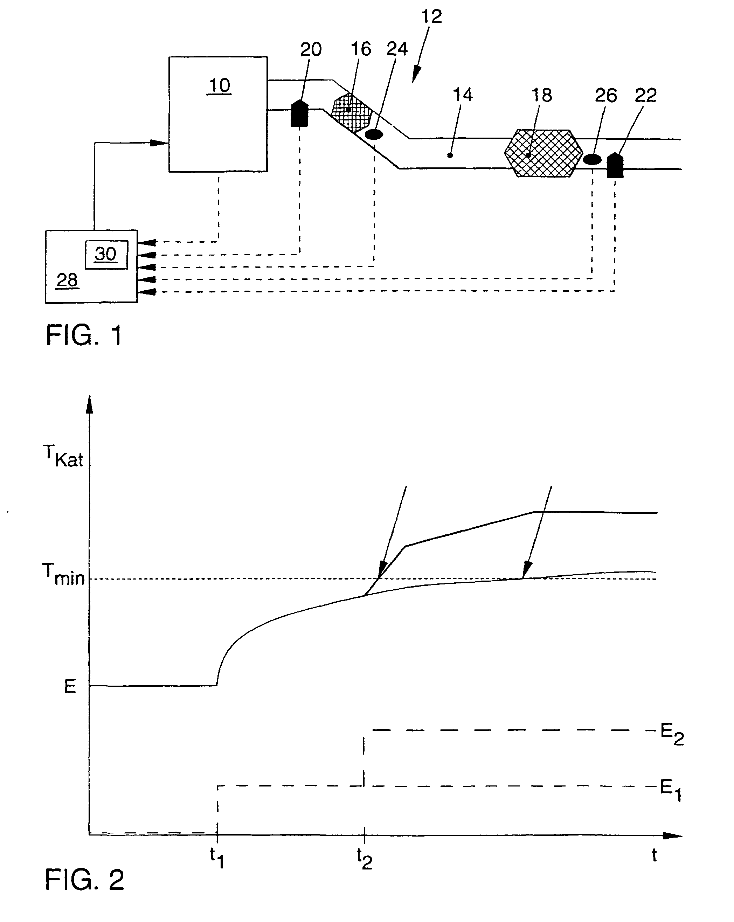

In Figur 1 ist eine Verbrennungskraftmaschine 10 mit einer insgesamt mit 12 bezeichneten Abgasanlage dargestellt. Die Abgasanlage 12 umfasst einen Abgaskanal 14, der an einer motornahen Position einen kleinvolumigen Vorkatalysator 16, beispielsweise einen 3-Wege-Katalysator, beherbergt. Dem Vorkatalysator 16 nachgeschaltet befindet sich an einer motorfernen Position, insbesondere an einer Unterbodenposition des Fahrzeuges, ein NOₓ-Speicherkatalysator 18, dessen Funktion in einer Speicherung von Stickoxiden des Abgases während magerer Betriebsphasen der Verbrennungskraftmaschine 10 besteht. Üblicherweise wird stromab der Verbrennungskraftmaschine 10 ein Sauerstoffgehalt des Abgases von einer Lambdasonde 20 kontinuierlich erfasst, um ein der Verbrennungskraftmaschine 10 zuzuführendes Luft-Kraftstoff-Gemisch zu regeln (Lambdaregelung). Der Zustand des NOₓ-Speicherkatalysators 18 kann beispielsweise durch einen dem NOₓ-Speicherkatalysator 18 nachgeschalteten NOₓ-Sensor 22 überwacht werden. Mit Hilfe des NOₓ-Sensors 22 kann dann eine Notwendigkeit einer Regeneration oder einer Entschwefelung des Speicherkatalysators 18 anhand eines NOₓ-Durchbruches erkannt werden. Andere Mittel oder Verfahren zur Überwachung sind bekannt und im Rahmen der Erfindung ebenfalls anwendbar. Stromab des Vorkatalysators 16 und des NOₓ-Speicherkatalysators 18 sind Temperatursensoren 24, 26 angeordnet, die eine Abgastemperatur messen. Unter Berücksichtigung eines gewissen Wärmeverlustes kann somit auf die Katalysatortemperatur des jeweiligen Katalysators 16, 18 geschlossen werden. Andere Anordnungen oder eine abweichende Anzahl von Temperatursensoren sind ebenfalls denkbar. Möglich ist ferner, die Abgastemperatur auf Basis bekannter Betriebsparameter (Motordrehzahl, Motorlast etc.) der Verbrennungskraftmaschine 10 mit hinreichender Genauigkeit zu berechnen. Die Signale aller im Abgaskanal 14 installierten Sensoren 20, 22, 24, 26 sowie verschiedene Betriebsparameter der Verbrennungskraftmaschine 10 finden Eingang in ein Motorsteuergerät 28. In Abhängigkeit dieser Signale regelt das Motorsteuergerät 28 den Betrieb der Verbrennungskraftmaschine 10.

NOₓ-Regenerationen als auch Entschwefelungen des NOₓ-Speicherkatalysators 18 erfordern eine Beaufschlagung des Katalysators 18 mit einer fetten Abgasatmosphäre sowie eine Mindestkatalysatortemperatur. Dabei ist die für die Freisetzung von Schwefel erforderliche Mindesttemperatur mit etwa 600 °C wesentlich höher als eine NOₓ-Desorptionstemperatur. Ausreichende Abgastemperaturen liegen häufig nicht vor, so dass es üblich ist, motorische und/oder nichtmotorische Maßnahmen zu ergreifen, um den Speicherkatalysator 18 aufzuheizen. In das Motorsteuergerät 28 ist daher eine Steuereinheit 30 integriert, in welcher ein Algorithmus in digitaler Form hinterlegt ist, durch den das erfindungsgemäße Verfahren zur variablen Erhöhung einer Katalysatortemperatur ausgeführt werden kann. Um eine Temperatur des NOₓ-Speicherkatalysators 18 anzuheben, wird der Energieeintrag in die Abgasanlage 12 erhöht. Dazu steuert in bekannter Weise die Steuereinheit 30 beispielsweise eine - hier nicht dargestellte - Zündanlage an, um eine Abgastemperatur etwa durch Spätzündung zu erhöhen. Andere motorische Maßnahmen zielen auf die Erhöhung unverbrannter Kohlenwasserstoff HC im Abgas ab, welche am Vorkatalysator 16 verbrennen und hierdurch zu einem Anstieg der Abgastemperatur beitragen. Es ist ferner bekannt, NOₓ-Speicherkatalysatoren 18 oder auch das diese durchströmende Abgas mit Hilfe geeigneter Heizvorrichtungen zu beheizen. Auch derartige Heizvorrichtungen können durch die Steuereinrichtung 30 gesteuert werden.

Das erfindungsgemäße Verfahren gemäß einer bevorzugten Ausgestaltung, bei der die Katalysatorheizung zweistufig durchgeführt wird, soll mit Hilfe der Figur 2 am Beispiel einer Entschwefelung des in Figur 1 gezeigten NOₓ-Speicherkatalysators 18 näher erläutert werden. Im unteren Teil des Diagramms ist der zeitliche Verlauf des Energieeintrages E in die Abgasanlage 12 dargestellt, während im oberen Teil die Entwicklung der mit dem Temperatursensor 26 ermittelten Katalysatortemperatur T_{Kat} des NOₓ-Speicherkatalysators 18 gezeigt ist. Zu einem Zeitpunkt t₁, an dem eine Entschwefelungsnotwendigkeit des NOₓ-Speicherkatalysators 18 festgestellt wird, wird in einer ersten Stufe durch die beschriebenen motorischen und/oder nichtmotorischen Maßnahmen der Energieeintrag E auf das Niveau E₁ erhöht. In Folge der erhöhten Temperatur des den Speicherkatalysator 18 durchströmenden Abgases steigt die Katalysatortemperatur T_{Kat} zunächst steil und im weiteren Verlauf zunehmend flacher an. Der Energieeintrag E₁ der ersten Stufe ist dabei so bemessen, dass die mit diesem maximal zu erzielende Katalysatortemperatur T_{Kat} geringfügig die angestrebte Mindesttemperatur Tₘᵢₙ, das ist in diesem Fall die Mindest-Entschwefelungstemperatur von zirka 600 °C, überschreitet. Dies entspricht einer Temperatur des Vorkatalysators 16 von 800 bis 1100 °C, vorzugsweise von 900 bis 1030 °C. Diese wird mit Hilfe des stromab des Vorkatalysators 26 angeordneten Temperatursensors 24 unter Berücksichtigung eines Wärmeverlustes von etwa 30 bis 70 K erfasst. Aufgrund des Sättigungscharakters des Verlaufs der Temperatur Tₖₐₜ des Speicherkatalysators 18 wäre mit dem Energieeintrag E₁ die Mindest-Entschwefelungstemperatur Tₘᵢₙ erst relativ spät erreicht. Dieser Zeitpunkt ist durch den rechten Pfeil im oberen Teil des Diagramms gekennzeichnet. Ferner könnten geringfügige Temperaturschwankungen des Abgases infolge von Betriebsänderungen der Verbrennungskraftmaschine 10 ein zeitweises Unterschreiten von Tₘᵢₙ am NOₓ-Speicherkatalysator 18 bewirken. In solchen Phasen wäre der Entschwefelungsprozess unterbrochen oder würde nur mit einer mangelnden Zuverlässigkeit stattfinden. Erfindungsgemäß wird daher - ehe die mit dem Energieeintrag E₁ erreichbare Endtemperatur am Speicherkatalysator 18 erreicht wird - der Energieeintrag E in einer zweiten Stufe auf das Niveau E₂ angehoben. Dies geschieht vorteilhafterweise zu einem Zeitpunkt t₂, 100 bis 800 s nach Beginn der ersten Stufe, vorzugsweise nach 400 bis 600 s. Der Energieeintrag E₂ ist derart bemessen, dass die Katalysatortemperatur des Vorkatalysators 16 900 bis 1150 °C, insbesondere 960 bis 1090 °C, beträgt. Dabei orientiert sich diese obere Temperaturschwelle an einer kritischen Temperatur, bei der mit einer irreversiblen thermischen Schädigung des Vorkatalysators 16 zu rechnen ist. Selbstverständlich wird die obere Temperaturschwelle mit einem ausreichenden Sicherheitsabstand zu dieser kritischen Temperatur gewählt. Wie im oberen Teil der Figur zu erkennen ist, wird bereits kurze Zeit nach Beginn der zweiten Stufe die Mindest-Entschwefelungstemperatur Tₘᵢₙ am NOₓ-Speicherkatalysator 18 erreicht (linker Pfeil). Die maximal erreichbare Katalysatortemperatur T_{Kat} der zweiten Stufe übersteigt naturgemäß die der ersten Stufe. Die Wahrscheinlichkeit, dass die Mindesttemperatur Tₘᵢₙ während dieser Phase unterschritten wird, ist verhältnismäßig gering, so dass die Entschwefelung sehr zuverlässig verläuft und das Verfahren eine hohe Prozesssicherheit aufweist. Durch das insgesamt schnellere Aufheizen sowie die höhere Endtemperatur des Katalysators 18 kann die Entschwefelungsgesamtdauer erheblich verkürzt werden. Trotz der gegenüber herkömmlichen Heizverfahren höheren Endtemperatur des Katalysators 18 kann daher eine Kraftstoffeinsparung erzielt werden. Ferner wird durch die insgesamt geringere thermische Belastung eine Alterung des Vorkatalysators 16 sowie des NOₓ-Speicherkatalysators 18 verlangsamt.

### BEZUGSZEICHENLISTE

- 10: Verbrennungskraftmaschine
- 12: Abgasanlage
- 14: Abgaskanal
- 16: Vorkatalysator
- 18: Katalysator / NOₓ-Speicherkatalysator
- 20: Lambdasonde
- 22: NOₓ-Sensor
- 24: Temperatursensor
- 26: Temperatursensor
- 28: Steuergerät
- 30: Steuereinheit

- E: Energieeintrag
- E₁: Energieeintrag der ersten Stufe
- E₂: Energieeintrag der zweiten Stufe
- t: Zeit
- T_{Kat}: Temperatur des Katalysators
- Tₘᵢₙ: Mindesttemperatur des Katalysators

## Patentansprüche

1. Verfahren zur Erhöhung einer Katalysatortemperatur eines in einer Abgasanlage (12) einer Verbrennungskraftmaschine (10) angeordneten Katalysators (16, 18), wobei durch mindestens eine motorische und/oder nichtmotorische Maßnahme ein Energieeintrag (E) in die Abgasanlage (12) gegenüber einem betriebspunktbedingten Energieeintrag erhöht wird und die Erhöhung des Energieeintrages (E) in die Abgasanlage (12) in mindestens zwei aufeinander folgenden Stufen mit unterschiedlichen Energieintensitäten durchgeführt wird, **dadurch gekennzeichnet, dass** ein erster Energieeintrag (E₁) einer ersten Stufe derart bemessen wird, dass eine mit dem ersten Energieeintrag (E₁) maximal erreichbare Katalysatortemperatur (T_{Kat}) des zu beheizenden Katalysators (18) im Wesentlichen einer angestrebten Mindesttemperatur (Tₘᵢₙ) entspricht oder geringfügig größer als diese ist, und in einer nachfolgenden Stufe der Energieeintrag erhöht wird.

2. Verfahren nach Anspruch 1, **dadurch gekennzeichnet, dass** eine durch die Erhöhung des Energieeintrages (E) zusätzlich in die Abgasanlage (12) eingebrachte Energiemenge in Abhängigkeit von einem betriebspunktbedingten Energieeintrag und/oder einer Katalysatortemperatur bemessen wird.

3. Verfahren nach Anspruch 1 oder 2, **dadurch gekennzeichnet, dass** die Erhöhung des Energieeintrages (E) in genau zwei Stufen durchgeführt wird.

4. Verfahren nach einem der vorhergehenden Ansprüche, **dadurch gekennzeichnet, dass** eine zweite Stufe beginnt, ehe die maximal in der vorausgegangenen Stufe erreichbare Katalysatortemperatur (T_{Kat}) erreicht ist.

5. Verfahren nach einem der vorhergehenden Ansprüche, **dadurch gekennzeichnet, dass** ein Energieeintrag einer letzten Stufe derart bemessen wird, dass eine mit dem Energieeintrag maximal erzielbare Temperatur des zu beheizenden Katalysators (16, 18) und/oder eines diesem vorgeschalteten Katalysators (16) eine vorgebbare Maximaltemperatur (Tₘₐₓ) nicht überschreitet.

6. Verfahren nach einem der vorhergehenden Ansprüche, **dadurch gekennzeichnet, dass** der zu beheizende Katalysator (16, 18) ein NOₓ-Speicherkatalysator (18) ist.

7. Verfahren nach Anspruch 6, **dadurch gekennzeichnet, dass** die angestrebte Mindesttemperatur (Tₘᵢₙ) eine Mindest-Entschwefelungstemperatur des NOₓ-Speicherkatalysators (18) ist.

8. Verfahren nach Anspruch 6 oder 7, **dadurch gekennzeichnet, dass** eine Dauer der ersten Stufe 100 bis 800 s, insbesondere 400 bis 600 s, beträgt.

9. Verfahren nach einem der Ansprüche 6 bis 8, **dadurch gekennzeichnet, dass** der Energieeintrag (E₁) der ersten Stufe derart bemessen wird, dass eine Katalysatortemperatur eines dem NOₓ-Speicherkatalysator (18) vorgeschalteten Vorkatalysators (16) von 800 bis 1100 °C, insbesondere von 900 bis 1030 °C, nicht überschritten wird.

10. Verfahren nach einem der Ansprüche 6 bis 9, **dadurch gekennzeichnet, dass** eine Dauer der zweiten und letzten Stufe 100 bis 800 s, insbesondere 400 bis 600 s, beträgt.

11. Verfahren nach einem der Ansprüche 6 bis 10, **dadurch gekennzeichnet, dass** der Energieeintrag (E₂) der zweiten und letzten Stufe derart bemessen wird, dass eine Katalysatortemperatur des dem NOₓ-Speicherkatalysator (18) vorgeschalteten Vorkatalysators (16) von 900 bis 1150 °C, insbesondere 960 bis 1090 °C, nicht überschritten wird.

12. Verfahren nach einem der vorhergehenden Ansprüche, **dadurch gekennzeichnet, dass** die motorischen Maßnahmen zur Steuerung des Energieeintrages (E) in die Abgasanlage (12) eine Zündwinkelsteuerung und/oder eine Regelung eines Luft-Kraftstoff-Gemisches umfassen.

13. Verfahren nach einem der vorhergehenden Ansprüche, **dadurch gekennzeichnet, dass** die nichtmotorischen Maßnahmen eine Beheizung des Katalysators (16, 18) und/oder des Abgases mittels einer Heizvorrichtung umfassen.

14. Verfahren nach einem der vorhergehenden Ansprüche, **dadurch gekennzeichnet, dass** eine Durchführung einer folgenden Stufe der Erhöhung des Energieeintrages (E) unterbleibt, wenn in der vorausgegangenen Stufe die angestrebte Mindesttemperatur (Tₘᵢₙ) am zu beheizenden Katalysator (16, 18) erreicht wurde.

15. Vorrichtung zur Erhöhung einer Katalysatortemperatur eines in einer Abgasanlage (12) einer Verbrennungskraftmaschine (10) angeordneten Katalysators (16, 18), wobei durch mindestens eine motorische und/oder nichtmotorische Maßnahme ein Energieeintrag (E) in die Abgasanlage (12) gegenüber einem betriebspunktbedingten Energieeintrag erhöht wird, wobei Mittel zur Steuerung der Erhöhung der Katalysatortemperatur vorgesehen sind derart, dass die Erhöhung des Energieeintrages (E) in die Abgasanlage (12) in mindestens zwei aufeinander folgenden Stufen mit unterschiedlichen Energieintensitäten ausführbar ist und ein erster Energieeintrag (E₁) einer ersten Stufe derart bemessen wird, dass eine mit dem ersten Energieeintrag (E₁) maximal erreichbare Katalysatortemperatur (T_{Kat}) des zu beheizenden Katalysators (16, 18) ungefähr einer angestrebten Mindesttemperatur (Tₘᵢₙ) entspricht oder geringfügig größer als diese ist, und in einer nachfolgenden Stufe der Energieeintrag erhöht wird.

16. Vorrichtung nach Anspruch 15, **dadurch gekennzeichnet, dass** die Mittel eine Steuereinheit (28) umfassen, in der eine Prozedur zur Steuerung des Verfahrens zur Erhöhung der Katalysatortemperatur (Tₖₐₜ) in digitaler Form hinterlegt ist.

17. Vorrichtung nach Anspruch 16, **dadurch gekennzeichnet, dass** die Steuereinheit (28) in ein Motorsteuergerät (26) integriert ist.

18. Vorrichtung nach einem der Ansprüche 15 bis 17, **dadurch gekennzeichnet, dass** eine Anordnung mindestens eines Temperatursensors (24, 26) in der Abgasanlage (12) vorgesehen ist, mit dem die Katalysatortemperatur (T_{Kat}) des zu beheizenden Katalysators (16, 18) und/oder eines diesem vorgeschalteten Katalysators (16) ermittelt werden kann.

## Claims

1. Method for increasing a catalyst temperature of a catalyst (16,18) arranged in an exhaust unit (12) of a combustion engine (10), wherein, through at least one engine-related and/or non-engine-related measure, an energy input (E) into the exhaust unit (12) is increased relative to an operating-point-determined energy input, and the increase in the energy input (E) into the exhaust unit (12) is implemented in at least two successive steps with different energy intensities,
**characterised in that**
a first energy input (E₁) of a first step is dimensioned in such a manner that a maximum attainable catalyst temperature (Tₖₐₜ) of the catalyst (18) to be heated, which is attainable with the first energy input (E₁), essentially corresponds to a target minimum temperature (Tₘᵢₙ) or is slightly higher than the latter, and that the energy input is increased in a subsequent step.

2. Method according to claim 1,
**characterised in that**
a quantity of energy additionally introduced into the exhaust unit (12) by increasing the energy input (E) is dimensioned in dependence upon an operating-point-determined energy input and/or a catalyst temperature.

3. Method according to claim 1 or 2,
**characterised in that**
the increase in the energy input (E) is implemented in exactly two steps.

4. Method according to any one of the preceding claims,
**characterised in that**
a second step begins before the maximum catalyst temperature (Tₖₐₜ) attainable in the preceding step has been reached.

5. Method according to any one of the preceding claims,
**characterised in that**
an energy input in a last step is dimensioned in such a manner that a maximum attainable temperature of the catalyst (16,18) to be heated and/or of a catalyst (16) connected upstream of the latter, which is attainable with the energy input, does not exceed a predeterminable maximum temperature (Tₘₐₓ).

6. Method according to any one of the preceding claims,
**characterised in that**
the catalyst (16,18) to be heated is an NOₓ storage catalyst (18).

7. Method according to claim 6,
**characterised in that**
the target minimum temperature (Tₘᵢₙ) is a minimum desulfuring temperature of the NOₓ storage catalyst (18).

8. Method according to claim at 6 or 7,
**characterised in that**
a duration of the first step is 100 to 800 seconds, in particular, 400 to 600 seconds.

9. Method according to any one of claims 6 to 8,
**characterised in that**
the energy input (E₁) of the first step is dimensioned in such a manner that a catalyst temperature of a preliminary catalyst (16) connected upstream of the NOₓ storage catalyst (18) of 800 to 1100 °C, in particular, of 900 to 1030°C is not exceeded.

10. Method according to any one of claims 6 to 9,
**characterised in that**
a duration of the second and last step is 100 to 800 seconds, in particular, 400 to 600 seconds.

11. Method according to any one of claims 6 to 10,
**characterised in that**
the energy input (E₂) of the second and last step is dimensioned in such a manner that a catalyst temperature of the preliminary catalyst (16) connected upstream of the NOₓ storage catalyst (18) of 900 to 1150 °C, in particular, 960 to 1090°C, is not exceeded.

12. Method according to any one of the preceding claims,
**characterised in that**
the engine-related measures for controlling the energy input (E) into the exhaust unit (12) comprise an ignition-angle control and/or a regulation of an air-fuel mixture.

13. Method according to any one of the preceding claims,
**characterised in that**
the non-engine-related measures comprise a heating of the catalyst (16,18) and/or of the exhaust gas by means of a heating device.

14. Method according to any one of the preceding claims,
**characterised in that**
an implementation of a subsequent step of increasing the energy input (E) is omitted, if the target minimum temperature (Tₘᵢₙ) in the catalyst (16,18) to be heated is reached in the preceding step.

15. Device for increasing a catalyst temperature of a catalyst (16,18) arranged in an exhaust unit (12) of a combustion engine (10), wherein, through at least one engine-related and/or non-engine-related measure, an energy input (E) into the exhaust unit (12) is increased relative to an operating-point-determined energy input, wherein means for controlling the increase of the catalyst temperature are provided in such a manner that the increase of the energy input (E) into the exhaust unit (12) can be implemented in at least two successive steps with different energy intensities, and a first energy input (E₁) of a first step is dimensioned in such a manner, that a maximum attainable catalyst temperature (Tₖₐₜ) of the catalyst (16,18) to be heated, which is attainable with the first energy input (E₁), corresponds approximately to a target minimum temperature (Tₘᵢₙ) or is slightly higher than the latter, and that the energy input is increased in a subsequent step.

16. Device according to claim 15,
**characterised in that**
the means comprise a control unit (28), in which a procedure for controlling the method for increasing the catalyst temperature (Tₖₐₜ) is stored in digital form.

17. Device according to claim 16,
**characterised in that**
the control unit (28) is integrated in an engine control unit (26).

18. Device according to any one of claims 15 to 17,
**characterised in that**
an arrangement of at least one temperature sensor (24,26) is provided in the exhaust unit (12), with which the catalyst temperature (Tₖₐₜ) of the catalyst (16,18) to be heated and/or of a catalyst (16) connected upstream of the latter, can be determined.

## Revendications

1. Procédé pour augmenter la température d'un catalyseur (16, 18) intégré dans un système d'échappement (12) d'un moteur (10) à combustion interne, au moins une intervention motorisée et/ou non motorisée ayant pour effet d'accroître un apport d'énergie (E) dans le système d'échappement (12), vis-à-vis d'un apport d'énergie tributaire d'un point opérationnel, et l'accroissement de l'apport d'énergie (E) dans le système d'échappement (12) s'effectuant en au moins deux étapes successives, avec des intensités d'énergie différentes, **caractérisé en ce qu'**un premier apport d'énergie (E₁) d'une première étape présente une valeur telle qu'une température maximale (T_{Kat}) du catalyseur (18) devant être chauffé, pouvant être atteinte par le premier apport d'énergie (E₁), corresponde pour l'essentiel à une température minimale (Tₘᵢₙ) recherchée, ou soit légèrement supérieure à cette dernière, et l'apport d'énergie est accru lors d'une étape successive.

2. Procédé selon la revendication 1, **caractérisé en ce qu'**une quantité d'énergie, additionnellement introduite dans le système d'échappement (12) du fait de l'accroissement de l'apport d'énergie (E), est mesurée en fonction d'un apport d'énergie tributaire d'un point opérationnel, et/ou d'une température du catalyseur.

3. Procédé selon la revendication 1 ou 2, **caractérisé en ce que** l'accroissement de l'apport d'énergie (E) est effectué en exactement deux étapes.

4. Procédé selon l'une des revendications précédentes, **caractérisé en ce qu'**une seconde étape débute avant que soit atteinte la température maximale (T_{Kat}) du catalyseur pouvant être obtenue durant l'étape précédente.

5. Procédé selon l'une des revendications précédentes, **caractérisé en ce qu'**un apport d'énergie d'une dernière étape est mesurée de sorte qu'une température maximale du catalyseur (16, 18) à chauffer et/ou d'un catalyseur (16) branché en amont de celui-ci, pouvant être obtenue par l'apport d'énergie, n'excède pas une température maximale (Tₘₐₓ) pouvant être préétablie.

6. Procédé selon l'une des revendications précédentes, **caractérisé en ce que** le catalyseur (16, 18) devant être chauffé est un catalyseur (18) à accumulation de NOₓ.

7. Procédé selon la revendication 6, **caractérisé en ce que** la température minimale (Tₘᵢₙ) recherchée est une température minimale de désulfurisation du catalyseur (18) à accumulation de NOₓ.

8. Procédé selon la revendication 6 ou 7, **caractérisé en ce qu'**une durée de la première étape mesure de 100 à 800 s, notamment de 400 à 600 s.

9. Procédé selon l'une des revendications 6 à 8, **caractérisé en ce que** l'apport d'énergie (Ei) de la première étape présente une valeur telle qu'une température d'un précatalyseur (16) branché en amont du catalyseur (18) à accumulation de NOₓ, allant de 800 à 1 100°C, notamment de 900 à 1 030°C, ne soit pas excédée.

10. Procédé selon l'une des revendications 6 à 9, **caractérisé en ce qu'**une durée de la seconde et dernière étape mesure de 100 à 800 s, notamment de 400 à 600 s.

11. Procédé selon l'une des revendications 6 à 10, **caractérisé en ce que** l'apport d'énergie (E₂) de la seconde et dernière étape présente une valeur telle qu'une température du précatalyseur (16) branché en amont du catalyseur (18) à accumulation de NOₓ, allant de 900 à 1 150°C, notamment de 960 à 1 090°C, ne soit pas excédée.

12. Procédé selon l'une des revendications précédentes, **caractérisé en ce que** les mesures concernant le moteur, visant à commander l'apport d'énergie (E) dans le système d'échappement (12), englobent une commande de l'angle d'allumage et/ou une régulation d'un mélange air-carburant.

13. Procédé selon l'une des revendications précédentes, **caractérisé en ce que** les mesures ne concernant pas le moteur englobent un chauffage du catalyseur (16, 18) et/ou des gaz d'échappement, au moyen d'un dispositif de chauffage.

14. Procédé selon l'une des revendications précédentes, **caractérisé en ce que** l'exécution d'une étape suivante de l'accroissement de l'apport d'énergie (E) demeure en suspens lorsque, durant l'étape précédente, la température minimale (Tₘᵢₙ) recherchée a été atteinte sur le catalyseur (16, 18) devant être chauffé.

15. Dispositif pour augmenter la température d'un catalyseur (16, 18) intégré dans un système d'échappement (12) d'un moteur (10) à combustion interne, sachant qu'au moins une intervention motorisée et/ou non motorisée a pour effet d'accroître un apport d'énergie (E) dans le système d'échappement (12), par rapport à un apport d'énergie tributaire d'un point opérationnel ; sachant que des moyens sont prévus pour commander l'augmentation de la température du catalyseur, de façon telle que l'accroissement de l'apport d'énergie (E) dans le système d'échappement (12) puisse être effectué en au moins deux étapes successives, avec des intensités d'énergie différentes, et qu'un premier apport d'énergie (E₁) d'une première étape présente une valeur telle qu'une température maximale (T_{Kat}) du catalyseur (16, 18) devant être chauffé, pouvant être obtenue avec le premier apport d'énergie (E₁), corresponde approximativement à une température minimale (Tₘᵢₙ) recherchée, ou soit légèrement supérieure à cette dernière, et que l'apport d'énergie soit accru lors d'une étape suivante.

16. Dispositif selon la revendication 15, **caractérisé en ce que** les moyens comprennent une unité de commande (28) dans laquelle est incorporé, sous forme numérique, un programme de commande du procédé d'augmentation de la température (T_{Kat}) du catalyseur.

17. Dispositif selon la revendication 16, **caractérisé en ce que** l'unité de commande (28) est intégrée dans un appareil (26) de commande du moteur.

18. Dispositif selon l'une des revendications 15 à 17, **caractérisé en ce qu'**il est prévu d'implanter, dans le système d'échappement (12), au moins une sonde thermométrique (24, 26) permettant d'établir la température (T_{Kat}) du catalyseur (16, 18) devant être chauffé, et/ou d'un catalyseur (16) branché en amont de ce dernier.
